# EUROPÄISCHE PATENTANMELDUNG

(11) **EP 0 544 034 A1**
(43) Veröffentlichungstag der Anmeldung: **02.06.1993**
(21) Anmeldenummer: 91120449.3
(22) Anmeldetag: 28.11.1991
(51) Int. Cl.: H04L 12/56

(54) **Verfahren zur Wiederherstellung der Reihenfolge von Nachrichtenzellen**

(71) Anmelder: SIEMENS AKTIENGESELLSCHAFT, D-80333 München (DE)
(72) Erfinder: Wallmeier, Eugen, Dr., W-8000 München 70 (DE)

(57) **Zusammenfassung**

Es wird eine besondere Ausgestaltung eines Zeitmarkierungsverfahrens angegeben, bei dem am Ausgang einer Vermittlungseinrichtung, die nach einem asynchronen Übertragungsverfahren übertragene Nachrichtenzellen über unterschiedliche Wege durchzuschalten vermag, die Reihenfolge von an einem Eingang zugeführten Nachrichtenzellen einer virtuellen Verbindung wiederhergestellt wird.

## Beschreibung

In Vermittlungssystemen, die nach einem asynchronen Übertragungsverfahren arbeiten, werden die von einer Endeinrichtung zu einer entfernten Endeinrichtung zu übertragenden Informationen im Zuge einer virtuellen Verbindung im Datenteil von jeweils einen Kopf und einen Datenteil aufweisenden Nachrichtenzellen mit vorgegebener Länge unter Einhaltung der Reihenfolge der Nachrichtenzellen übertragen. In den Knotenpunkten des Vermittlungssystems können Vermittlungseinrichtungen zum Einsatz kommen, bei denen die Nachrichtenzellen einer virtuellen Verbindung über unterschiedliche Wege von einem Eingang zu einem Ausgang durchgeschaltet werden können. Bei der Durchschaltung von Nachrichtenzellen über verschiedene Wege kann es zu unterschiedlich langen Verzögerungen von Nachrichtenzellen kommen, so daß Überholungen von Nachrichtenzellen einer virtuellen Verbindung auftreten können. Am Ausgang einer solchen Vermittlungseinrichtung ist es demnach erforderlich, für die Einhaltung der Reihenfolge von Nachrichtenzellen jeder virtuellen Verbindung zu sorgen.

Aus der Nachrichtentechnischen Zeitschrift Heft 11 (1990), Seiten 810...815 ist eine Vermittlungseinrichtung bekannt, bei der Nachrichtenzellen über mehrfache Wegemöglichkeiten von den Eingängen zu den Ausgängen durchgeschaltet werden. Zur Wiederherstellung der Reihenfolge der Nachrichtenzellen wird ein einfacher Verzögerungsausgleich angewendet, bei dem jeder Nachrichtenzelle am Eingang des Koppelfeldes eine Zeitinformation mitgegeben wird. Am Ausgang wird diese Zeitinformation ausgewertet und eine jeweilige Nachrichtenzelle solange festgehalten, bis seit ihrem Eintreten in das Koppelfeld eine feste Zeit vergangen ist. Dann wird eine jeweilige Zelle über einen Ausgangspuffer, der Kollisionen durch gleichzeitig an verschiedenen Koppelfeldeingängen ankommenden Nachrichtenzellen mit gleichem Ziel auflöst, zur Weiterleitung auf die betreffende Abnehmerleitung freigegeben.

Bei diesem bekannten Verfahren bleibt offen, um welche Dauer die Nachrichtenzellen durch Anwendung dieses Verfahren zusätzlich zu der festen Zeit verzögert werden.

Die Erfindung weist demgegenüber einen Weg, die durch die Wiederherstellung der Reihenfolge von Nachrichtenzellen am Ausgang einer Vermittlungseinrichtung bedingte Verzögerung zu begrenzen.

Die Erfindung betrifft ein Verfahren zur Wiederherstellung der Reihenfolge von Nachrichtenzellen einer virtuellen Verbindung am Ausgang einer Vermittlungseinrichtung, die nach einem asynchronen Übertragungsverfahren übertragene Nachrichtenzellen über unterschiedliche Wege von einem jeweiligen Eingang zu einem jeweiligen Ausgang zu vermitteln vermag, indem
- jeder Nachrichtenzelle am Eingang der Vermittlungseinrichtung eine den aktuellen Ankunftszeitpunkt bezeichnende Zeitinformation beigefügt wird,
- für jede Nachrichtenzelle anhand der zugehörigen Zeitinformation und einer vorgegebenen Zeitdauer ein Nachrichtenzellenzyklus ermittelt wird, in dem die jeweilige Nachrichtenzelle zur Weiterleitung auf die betreffende Abnehmerleitung freigegeben wird und
- die Nachrichtenzellen zu dem mit einer jeweiligen Abnehmerleitung verbundenen Ausgang durchgeschaltet werden, und demzufolge
- die für eine jeweilige Abnehmerleitung bestimmten Nachrichtenzellen jeweils in einem eine Nachrichtenzelle (C) und einen zugehörigen Pointer (Ptr) aufnehmenden Speicherplatz (Sp) eines Nachrichtenzellenspeichers (CM) abgespeichert werden und
- die einzelnen Speicherzellen (Sz) eines Markierspeichers (TA) mit jedem Nachrichtenzellenzyklus fortschreitend zyklisch angesteuert werden und
- für die jeweils erste Nachrichtenzelle, die in einem jeweils ermittelten Nachrichtenzellenzyklus zur Weiterleitung auf eine jeweilige Abnehmerleitung freigegeben werden soll, in der dem Nachrichtenzellenzyklus entsprechenden Speicherzelle (Sz) des Markierspeichers (TA) eine Anfangsmarkierung (AM) gesetzt wird, die im Nachrichtenzellenspeicher (CM) den Speicherplatz (Sp) der jeweiligen ersten Nachrichtenzelle bezeichnet und
- für jede weitere Nachrichtenzelle, die in dem jeweiligen Nachrichtenzellenzylus zur Weiterleitung auf die jeweilige Abnehmerleitung freigegeben werden soll, in dem Speicherplatz der jeweils vorhergehenden Nachrichtenzelle ein Pointer (Ptr) gesetzt wird, der den Speicherplatz der jeweiligen weiteren Nachrichtenzelle bezeichnet und
- für die jeweils letzte Nachrichtenzelle, die in dem genannten Nachrichtenzellenzyklus zur Weiterleitung auf die jeweilige Abnehmerleitung freigegeben werden soll, in der dem Nachrichtenzellenzyklus entsprechenden Speicherzelle (Sz) des Markierspeichers (TA) eine Endmarkierung (EM) gesetzt wird, die im Nachrichtenzellenspeicher (CM) den Speicherplatz (Sp) der jeweiligen letzten Nachrichtenzelle bezeichnet, womit die in der jeweiligen Speicherzelle (Sz) gesetzte Anfangsmarkierung (AM) und Endmarkierung (EM) die erste und die letzte Nachrichtenzelle einer Ausgabeliste von Nachrichtenzellen bezeichnet, die in dem genannten Nachrichtenzellenzyklus zur Weiterleitung auf die jeweilige Abnehmerleitung freigegeben werden und
- eine jeweilige Ausgabeliste im Zuge der zyklischen Ansteuerung der Speicherzelle (Sz), in der die zugehörige Anfangsmarkierung (AM) und Endmarkierung (EM) gesetzt ist, zur Weiterleitung auf die jeweilige Abnehmerleitung freigegeben wird und
- freigegebene Ausgabelisten in eine Ausleseliste eingebunden werden, deren Anfang durch einen Ausleselistenanfangszeiger (OLH) und deren Ende durch einen Ausleselistenendzeiger (OLT) bezeichnet wird, wobei die Endmarkierung der zuletzt eingegebenen Ausgabeliste den aktuellen Ausleselistenendzeiger bildet, und
- die Anfangs- und Endmarkierungen von eingebundenen Ausgabelisten gelöscht werden und
- mit jedem Nachrichtenzellenzyklus die Nachrichtenzelle, deren Speicherplatz gerade durch den Ausleselistenanfangszeiger (OLH) bezeichnet wird, auf die jeweilige Abnehmerleitung weitergeleitet wird und der Ausleselistenanfangszeiger (OLH) gegebenenfalls auf den nächstfolgenden Speicherplatz der Ausleseliste weitergeschaltet wird.

Die Erfindung bringt neben einer Begrenzung der durch die Anwendung des Verfahrens bedingten Verzögerung von Nachrichtenzellen auf die Dauer eines Nachrichtenzellenzyklus' den Vorteil einer Begrenzung der während eines Nachrichtenzellenzyklus' auszuführenden Arbeitsschritte mit sich.

Die Erfindung wird nun als Ausführungsbeispiel im zum Verständnis der Erfindung erforderlichen Umfang anhand von Figuren beschrieben.

Dabei zeigen:
- Fig. 1: eine prinzipielle Darstellung einer Vermittlungseinrichtung, an deren Ausgängen nach dem erfindungsgemäßen Verfahren arbeitende Zellenordner angeordnet sind,
- Fig. 2: nähere Einzelheiten des inneren Aufbaus eines Zellordners nach Figur 1,
- Fig. 3: eine Darstellung von Vorgängen, die während eines Nachrichtenzellenzyklus' innerhalb eines Zellenordners ablaufen.

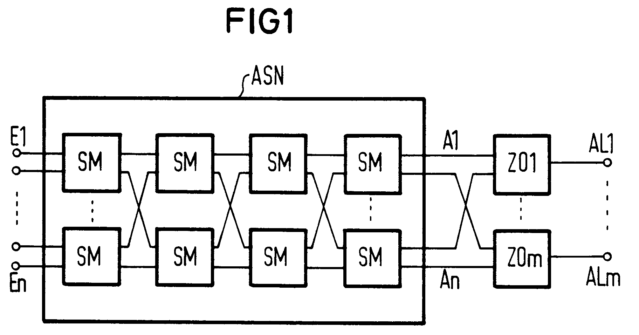

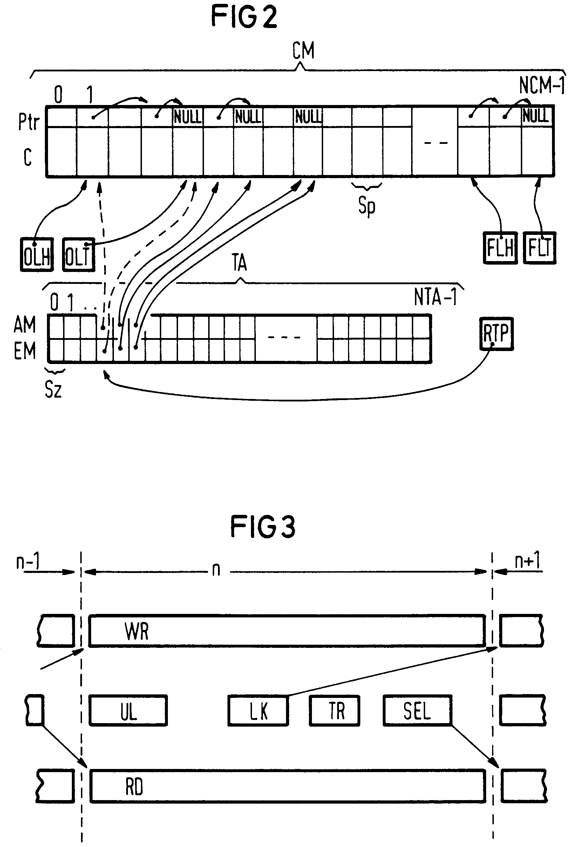

Figur 1 zeigt ein Koppelfeld ASN, über das Nachrichtenzellen, die nach einem asynchronen Übertragungsverfahren übertragen werden, von einem Eingang E1...En zu einem Ausgang A1...An durchgeschaltet werden können. Bei dem Koppelfeld möge es sich um eine mehrstufige mit einer Vielzahl von Koppelmodulen SM gebildete Koppelanordnung handeln, die an einem Eingang zugeführte Nachrichtenzellen einer virtuellen Verbindung über unterschiedliche Koppelmodule und damit unterschiedliche Wege zu einem Ausgang durchzuschalten vermag. Eine jeweilige Mehrzahl von Ausgängen ist über einen jeweiligen Zellenordner ZO mit einer zugehörigen Abnehmerleitung AL verbunden.
Erfindungsgemäß wird jeder Nachrichtenzelle, die an einem Eingang des Koppelfeldes ankommt, eine Zeitinformation beigefügt, die den aktuellen Zeitpunkt der Ankunft in dem Koppelfeld angibt. Die Nachrichtenzellen, die jeweils einen Datenteil zur Aufnahme von Nutzinformation und einen diesem vorangestellten Kopf aufweisen, werden dann zu einem jeweiligen, durch die in dem Kopf enthaltene virtuelle Kanalnummer festgelegten Ausgang des Koppelfeldes durchgeschaltet. Am Ausgang des Koppelfeldes werden die Nachrichtenzellen einem mit der betreffenden Abnehmerleitung AL verbundenen Zellenordner zugeführt. Der Zellenordner weist nach Figur 2 einen Nachrichtenzellenspeicher CM auf, der eine Vielzahl 0...NCM - 1 von jeweils eine Nachrichtenzelle C und einen Pointer Ptr aufnehmende Speicherplätze Sp aufweist. Eine gerade ankommende Nachrichtenzelle wird in einen freien Speicherplatz des Nachrichtenzellenspeichers eingeschrieben. Zugangskonflikte von Nachrichtenzellen, die von unterschiedlichen Ausgängen gleichzeitig einen Zellenordner erreichen, können dadurch gelöst werden, daß die Nachrichtenzellen in für jeden Ausgang vorgesehene, nicht näher dargestellte Zwischenspeicher abgespeichert werden um dann in an sich bekannter Weise nacheinander in jeweils einen freien Speicherplatz des Nachrichtenzellenspeichers abgespeichert zu werden. Die freien Speicherplätze des Nachrichtenzellenspeichers können in einer Freiliste zusammengefaßt sein, die die freien Speicherplätze bezeichnet. Dabei kann ein Zeiger FLH die Adresse des ersten Speicherplatzes der Freiliste und ein Zeiger FLT die Adresse des letzten Speicherplatzes der Freiliste bezeichnen; ein in einem jeweiligen Speicherplatz enthaltener Pointer kann auf den jeweils nachfolgenden Speicherplatz der Freiliste verweisen, wobei der Speicherplatz, den der Zeiger FLT bezeichnet, in seinem Pointer die Bezeichnung NULL tragen kann. Eine gerade ankommende Nachrichtenzelle wird also in einen freien Speicherplatz eingeschrieben, wobei vorzugsweise jeweils in den Speicherplatz eingeschrieben wird, auf den gerade der Zeiger FLH verweist. Nachdem in den jeweiligen freien Speicherplatz geschrieben wurde, verweist der Zeiger FLH auf den Speicherplatz, der durch den Pointer des Speicherplatzes bezeichnet wird, in den gerade eingeschrieben wurde. Anhand der den Nachrichtenzellen am Eingang der Vermittlungseinrichtung beigefügten Zeitinformation ist für jede Nachrichtenzelle ein jeweiliger Nachrichtenzellenzyklus festgelegt, in dem die betreffende Nachrichtenzelle zur Weiterleitung auf die Abnehmerleitung freigegeben wird. Der betreffende Nachrichtenzellenzyklus kann durch Hinzufügung einer festen Zeitdauer zu dem jeweiligen Ankunftszeitpunkt einer Nachrichtenzelle gegeben sein. Die Zeitdauer kann dabei durch die Zeitspanne gegeben sein, innerhalb derer die Nachrichtenzellen mit einer vorgegebenen Wahrscheinlichkeit von einem Eingang zu einem Ausgang der Vermittlungseinrichtung durchgeschaltet sind. Der Nachrichtenzellenzyklus, in dem eine jeweilige Nachrichtenzelle zur Weiterleitung auf die betreffende Abnehmerleitung freigegeben wird, kann also bereits mit der Feststellung des Ankunftszeitpunktes am Eingang der Vermittlungseinrichtung festgelegt sein. Nachrichtenzellen, die länger als die feste Zeitdauer für die Durchschaltung durch das Koppelfeld benötigen, werden als verloren betrachtet.

Weiter weist ein jeweiliger Zellenordner einen Markierungsspeicher TA auf, der mit einer Vielzahl 0 ... NTA-1 von Speicherzellen Sz gebildet ist. Die Speicherzellen des Markierungsspeichers werden der Reihe nach mit jedem Nachrichtenzellenzyklus fortschreitend zyklisch durch einen Echtzeitzeiger RTP angesteuert. Der Echtzeitzeiger kann beispielsweise durch einen Zähler gegeben sein, der mit einem, mit aufeinanderfolgenden Nachrichtenzellenzyklen korrespondierenden, Taktsignal angesteuert wird und der ausgangsseitig eine der Anzahl der Speicherzellen entsprechende Anzahl von Zuständen abgeben kann. Der Markierungsspeicher weist vorzugsweise eine solche Anzahl von Speicherzellen auf, die der Anzahl von Nachrichtenzellenzyklen während der vorgegebenen Zeitdauer zur Durchschaltung von Nachrichtenzellen durch das Koppelfeld entspricht. Mit jedem Nachrichtenzellenzyklus fortschreitend, der beispielsweise 2,8 µs betragen möge, wird also eine jeweilige nächste Speicherzelle des Markierungsspeichers angesteuert, der damit als Zeitachse angesehen werden kann. Jede Speicherzelle kann eine Anfangsmarkierung AM und eine Endmarkierung EM aufnehmen, die jeweils einen Speicherplatz des Nachrichtenzellenspeichers bezeichnen.
Handelt es sich bei einer gerade in den Nachrichtenzellenspeicher eingeschriebenen Nachrichtenzelle um die jeweils erste Nachrichtenzelle, die in dem ermittelten Nachrichtenzellenzyklus zur Weiterleitung auf die betreffende Abnehmerleitung freigegeben werden soll, so wird in der dem ermittelten Nachrichtenzellenzyklus entsprechenden Speicherzelle des Markierungsspeichers in der Zeile AM eine Anfangsmarkierung gesetzt, die den Speicherplatz bezeichnet, in dem die Nachrichtenzelle gerade eingeschrieben wird. Eine Nachrichtenzelle kann dadurch als die jeweilige erste Nachrichtenzelle, die in einem jeweiligen Nachrichtenzellenzyklus zur Weiterleitung freigegeben werden soll, identifiziert werden, daß in der dem betreffenden Nachrichtenzellenzyklus entsprechenden Speicherzelle keine Anfangsmarkierung gesetzt ist.

Ist in einer Speicherzelle eine Anfangsmarkierung gesetzt, so verweist in der gleichen Speicherzelle in der Zeile EM des Markierungsspeichers TA eine Endmarkierung auf den Speicherplatz der Nachrichtenzelle, die jeweils als letzte in dem betreffenden Nachrichtenzellenzyklus zur Weiterleitung freigegeben werden soll. Soll beispielsweise in einem gegebenen Nachrichtenzellenzyklus lediglich eine Nachrichtenzelle zur Weiterleitung freigegeben werden, so verweist die betreffende Anfangsmarkierung und die betreffende Endmarkierung in der dem betreffenden Nachrichtenzellenzyklus entsprechenden Speicherzelle auf den gleichen Speicherplatz, in dem die betreffende Nachrichtenzelle abgespeichert ist.
Ist in der Speicherzelle, die dem Nachrichtenzellenzyklus entspricht, in dem eine gerade in einen Speicherplatz des Nachrichtenzellenspeichers eingeschriebene Nachrichtenzelle zur Weiterleitung freigegeben werden soll, bereits eine Anfangsmarkierung und eine Endmarkierung gesetzt, so handelt es sich um eine weitere Nachrichtenzelle, die in dem betreffenden Nachrichtenzellenzyklus zur Weiterleitung freigegeben werden soll. Für jede weitere Nachrichtenzelle wird in die mit Ptr bezeichnete Zeile des Speicherplatzes, auf den die Endmarkierung in der dem betreffenden Nachrichtenzellenzyklus entsprechenden Speicherzelle verweist, ein Pointer eingetragen, der auf den Speicherplatz der betreffenden weiteren Nachrichtenzelle verweist. Die gerade eingeschriebene weitere Nachrichtenzelle bildet nun die letzte Nachrichtenzelle, die in dem jeweiligen Nachrichtenzellenzyklus weitergeleitet werden soll, womit die Endmarkierung in der dem betreffenden Nachrichtenzellenzyklus entsprechenden Speicherzelle auf die gerade eingeschriebene weitere Nachrichtenzelle verweist. Die Nachrichtenzellen, die in einem jeweiligen Nachrichtenzellenzyklus zur Weiterleitung freigegeben werden, bilden eine Ausgabeliste, wobei die Anfangsmarkierung und die Endmarkierung in der dem betreffenden Nachrichtenzellenzyklus entsprechenden Speicherplatz den Speicherplatz der ersten bzw. der letzten Nachrichtenzelle der Ausgabeliste bezeichnet und ein jeweiliger Pointer in den Speicherplätzen auf den Speicherplatz einer jeweiligen nachfolgenden Nachrichtenzelle der Ausgabeliste verweist; Speicherplätze, von denen auf keinen weiteren Speicherplatz verwiesen wird, können in der Zeile Ptr eine besondere Bezeichnung wie z. B. NULL tragen. Wird bei der zyklischen Ansteuerung von Speicherzellen des Markierungsspeichers durch den Echtzeitzeiger RTP eine Speicherzelle angesteuert, in der eine Anfangsmarkierung und eine Endmarkierung gesetzt ist, so wird die durch diese Anfangs- und Endmarkierung bezeichnete Ausgabeliste zur Weiterleitung auf die Abnehmerleitung freigegeben. Freigegebene Ausgabelisten werden in eine Ausleseliste eingebunden, deren Anfang durch einen Ausleselistenanfangszeiger OLH und deren Ende durch einen Ausleselistenzeiger OLT gegeben ist. Mit dem Einbinden in die Ausleseliste werden die Anfangs- und Endmarkierung AM, bzw. EM der betreffenden Ausgabeliste in dem Markierungsspeicher gelöscht. Eine neu hinzugekommene Ausgabeliste wird derart in die Ausleseliste eingebunden, daß das durch die zugehörige Endmarkierung EM gegebene Ende der Ausgabeliste das aktuelle, durch den Ausleselistenendzeiger OLT gegebene Ende der Ausleseliste bildet. Mit jedem Nachrichtenzellenzyklus wird eine Nachrichtenzelle, auf deren Speicherplatz der Ausleselistenanfangszeiger OLH gerade verweist, auf die betreffende Abnehmerleitung weitergeleitet. Die Speicherplätze aus denen jeweils eine Nachrichtenzelle weitergeleitet wurde, werden mit Hilfe eines Pointers an das durch den Zeiger FLT bezeichnete Ende der Freiliste angehängt. Nach der Weiterleitung einer Nachrichtenzelle verweist der Ausleselistenanfangszeiger OLH gegebenenfalls auf den Speicherplatz, in dem die als nächstes weiterzuleitende Nachrichtenzelle abgespeichert ist.

In Figur 3 sind Abläufe dargestellt, wie sie bei dem erfindungsgemäßen Verfahren während eines Nachrichtenzellenzyklus ablaufen können. Für den Nachrichtenzellenzyklus n ist in Zeile RD dargestellt, daß eine Nachrichtenzelle einer freigegebenen Ausgabeliste annähernd während des gesamten Nachrichtenzellenzyklus' auf die betreffende Abnehmerleitung weitergeleitet wird. Aus Zeile WR ist ersichtlich, daß eine gerade ankommende Nachrichtenzelle annähernd während des gesamten Nachrichtenzellenzyklus' in den Speicherplatz des Nachrichtenzellenspeichers eingeschrieben wird, auf den der Zeiger FLH verweist.
Während jedes Nachrichtenzellenzyklus können mit UL, LK, TR und SEL bezeichnete Prozeduren ablaufen. Sobald die der gerade einzuschreibenden Nachrichtenzelle beigefügte Zeitinformation angekommen ist, wird mit Hilfe der Prozedur LK die Bezeichnung des Speicherplatzes, in den die Nachrichtenzelle gerade eingeschrieben wird, mit der Ausgabeliste verbunden, die in dem betreffenden Nachrichtenzellenzyklus zur Weiterleitung freigegeben wird. Am Ende der Prozedur LK ist, wie durch einen Pfeil angedeutet, festgelegt, in welchen Speicherplatz während des darauffolgenden Nachrichtenzellenzyklus' n + 1 eine Nachrichtenzelle eingeschrieben werden kann. Eine Ausgabeliste, die während eines aktuellen Nachrichtenzellenzyklus' freigegeben wird, wird mit Hilfe der Prozedur TR in die Ausleseliste eingebunden, deren Anfang und Ende durch den Ausleselistenanfangszeiger OLH und Ausleselistenendzeiger OLT gegeben ist. Mit Hilfe der Prozedur SEL wird für den Fall, daß während des darauffolgenden Nachrichtenzellenzyklus n + 1 eine Nachrichtenzelle weitergeleitet werden soll, die Bezeichnung des Speicherplatzes bestimmt, aus dem die Nachrichtenzelle ausgelesen werden soll. Mit Hilfe der Prozedur UL wird ein Speicherplatz, aus dem während des aktuellen Nachrichtenzellenzyklus n eine Nachrichtenzelle weitergeleitet wird von der zugehörigen Ausgabeliste entkoppelt, und an den Speicherplatz der Freiliste angehängt, auf den der Zeiger FLT weist. Anschließend verweist der Zeiger FLT auf den zuletzt zur Freiliste hinzugekommenen Speicherplatz.
Aus der Beschreibung und der Figur 3 geht hervor, daß bereits in dem jeweiligen einem aktuellen Nachrichtenzellenzykus vorausgehenden Nachrichtenzellenzyklus festgelegt ist, in welchen Speicherplatz eine ankommende Nachrichtenzelle eingeschrieben werden kann bzw. aus welchem Speicherplatz eine Nachrichtenzelle weitergeleitet werden soll. Daraus ist ersichtlich, daß eine während des aktuellen Nachrichtenzellenzyklus' ankommende Nachrichtenzelle bereits in dem darauffolgenden Nachrichtenzellenzyklus weitergeleitet werden kann, was gleichbedeutend damit ist, daß die durch die Anwendung des erfindungsgemäßen Verfahrens bedingte Verzögerung von Nachrichtenzellen die Dauer eines Nachrichtenzellenzyklus' beträgt.
Aus dem Gesamtinhalt der Beschreibung geht hervor, daß während jedes Nachrichtenzellenzyklus' eine begrenzte Anzahl von Arbeitsschritten auszuführen sind, ohne daß Suchabläufe mit einer nicht vorgegebenen Anzahl von Arbeitsschritten notwendig wären.

## Patentansprüche

1. Verfahren zur Wiederherstellung der Reihenfolge von Nachrichtenzellen einer virtuellen Verbindung am Ausgang einer Vermittlungseinrichtung, die nach einem asynchronen Übertragungsverfahren übertragene Nachrichtenzellen über unterschiedliche Wege von einem jeweiligen Eingang zu einem jeweiligen Ausgang zu vermitteln vermag, indem
- jeder Nachrichtenzelle am Eingang der Vermittlungseinrichtung eine den aktuellen Ankunftszeitpunkt bezeichnende Zeitinformation beigefügt wird,
- für jede Nachrichtenzelle anhand der zugehörigen Zeitinformation und einer vorgegebenen Zeitdauer ein Nachrichtenzellenzyklus ermittelt wird, in dem die jeweilige Nachrichtenzelle zur Weiterleitung auf die betreffende Abnehmerleitung freigegeben wird und
- die Nachrichtenzellen zu dem mit einer jeweiligen Abnehmer leitung verbundenen Ausgang durchgeschaltet werden, und demzufolge
- die für eine jeweilige Abnehmerleitung bestimmten Nachrichtenzellen jeweils in einem eine Nachrichtenzelle (C) und einen zugehörigen Pointer (Ptr) aufnehmenden Speicherplatz (Sp) eines Nachrichtenzellenspeichers (CM) abgespeichert werden und
- die einzelnen Speicherzellen (Sz) eines Markierspeichers (TA) mit jedem Nachrichtenzellenzyklus fortschreitend zyklisch angesteuert werden und
- für die jeweils erste Nachrichtenzelle, die in einem jeweils ermittelten Nachrichtenzellenzyklus zur Weiterleitung auf eine jeweilige Abnehmerleitung freigegeben werden soll, in der dem Nachrichtenzellenzyklus entsprechenden Speicherzelle (Sz) des Markierspeichers (TA) eine Anfangsmarkierung (AM) gesetzt wird, die im Nachrichtenzellenspeicher (CM) den Speicherplatz (Sp) der jeweiligen ersten Nachrichtenzelle bezeichnet und
- für jede weitere Nachrichtenzelle, die in dem jeweiligen Nachrichtenzellenzylus zur Weiterleitung auf die jeweilige Abnehmerleitung freigegeben werden soll, in dem Speicherplatz der jeweils vorhergehenden Nachrichtenzelle ein Pointer (Ptr) gesetzt wird, der den Speicherplatz der jeweiligen weiteren Nachrichtenzelle bezeichnet und
- für die jeweils letzte Nachrichtenzelle, die in dem genannten Nachrichtenzellenzyklus zur Weiterleitung auf die jeweilige Abnehmerleitung freigegeben werden soll, in der dem Nachrichtenzellenzyklus entsprechenden Speicherzelle (Sz) des Markierspeichers (TA) eine Endmarkierung (EM) gesetzt wird, die im Nachrichtenzellenspeicher (CM) den Speicherplatz (Sp) der jeweiligen letzten Nachrichtenzelle bezeichnet, womit die in der jeweiligen Speicherzelle (Sz) gesetzte Anfangsmarkierung (AM) und Endmarkierung (EM) die erste und die letzte Nachrichtenzelle einer Ausgabeliste von Nachrichtenzellen bezeichnet, die in dem genannten Nachrichtenzellenzyklus zur Weiterleitung auf die jeweilige Abnehmerleitung freigegeben werden und
- eine jeweilige Ausgabeliste im Zuge der zyklischen Ansteuerung der Speicherzelle (Sz), in der die zugehörige Anfangsmarkierung (AM) und Endmarkierung (EM) gesetzt ist, zur Weiterleitung auf die jeweilige Abnehmerleitung freigegeben wird und
- freigegebene Ausgabelisten in eine Ausleseliste eingebunden werden, deren Anfang durch einen Ausleselistenanfangszeiger (OLH) und deren Ende durch einen Ausleselistenendzeiger (OLT) bezeichnet wird, wobei die Endmarkierung der zuletzt eingebundenen Ausgabeliste den aktuellen Ausleselistenendzeiger bildet, und
- die Anfangs- und Endmarkierungen von eingebundenen Ausgabelisten gelöscht werden und
- mit jedem Nachrichtenzellenzyklus die Nachrichtenzelle, deren Speicherplatz durch den Ausleselistenanfangszeiger (OLH) gerade bezeichnet wird, auf die jeweilige Abnehmerleitung weitergeleitet wird und der Ausleselistenanfangszeiger (OLH) gegebenenfalls auf den nächstfolgenden Speicherplatz der Ausleseliste weitergeschaltet wird.

2. Verfahren nach Anspruch 1,
bei dem die Nachrichtenzellen in einem jeweiligen Nachrichtenzellenspeicher abgespeichert werden, der eine Anzahl von Speicherplätzen aufweist, die der um Eins erhöhten Anzahl von Nachrichtenzellenzyklen während der vorgegebenen Zeitdauer entspricht.

3. Verfahren nach einem der vorstehenden Ansprüche,
bei dem zur Ermittlung des Nachrichtenzellenzyklus' der Zeitinformation die Zeitdauer hinzuaddiert wird.

4. Verfahren nach Anspruch 3,
bei dem die Zeitdauer mit der Beifügung der Zeitinformation der Zeitinformation hinzuaddiert wird.
